# EUROPÄISCHE PATENTSCHRIFT

(11) **EP 1 245 453 B1**
(45) Veröffentlichungstag und Bekanntmachung des Hinweises auf die Patenterteilung: **03.09.2008**
(21) Anmeldenummer: 02002907.0
(22) Anmeldetag: 09.02.2002
(51) Int. Cl.: B60R 16/02, H04L 12/40

(54) **Steuerungssystem und Verfahren zur Steuerung von Kraftfahrzeugkomponenten**
System and method for controlling components of a vehicle
Système et procédé pour commander des composants de véhicules

(30) Priorität: 09.03.2001 DE 10111286
(43) Veröffentlichungstag der Anmeldung: 02.10.2002
(73) Patentinhaber: AUDI AG, 85045 Ingolstadt (DE)
(72) Erfinder: Schwantner, Bernhard, 85072 Eichstätt (DE)
(74) Vertreter: Thielmann, Frank

(56) Entgegenhaltungen:
- EP-A- 0 399 491
- DE-A1- 19 728 841
- US-A- 4 347 609
- US-A- 5 077 670

## Beschreibung

Die Erfindung betrifft ein Steuerungssystem und Verfahren zur Steuerung von Kraftfahrzeugkomponenten, insbesondere elektronisch ansteuerbarer Kraftfahrzeugkomponenten.

Es ist bekannt, Kraftfahrzeuge aus Gründen der Bedienungsfreundlichkeit und der Sicherheit mit einer Vielzahl von elektronisch ansteuerbaren Komponenten auszustatten. Diese werden in der Regel über einen BUS, beispielsweise einen Teil eines CAN (Controller Area Network), miteinander und insbesondere mit einem Steuergerät, das die einzelnen Komponenten ansteuern kann und von dem Benutzer des Fahrzeuges direkt oder über drahtlose Verbindungen bedient werden kann, verbunden. Solche elektronisch ansteuerbaren Kraftfahrzeugkomponenten können beispielsweise Türschlösser, Heckklappenverschlüsse, Alarmanlagen, Fensterheber und Sitzverstellungen sein.

Von dem Steuergerät (Sender) werden Empfänger für die einzelnen Komponenten angesteuert, die dann Funktionen der Komponenten ausführen oder initiieren. Die Empfänger können entweder unmittelbar in den Komponenten vorgesehen sein oder an diese angeschlossene Elemente darstellen.

Aus DE 195 30 727 ist ein Verfahren zum Betrieb eines Steuersystems zur Steuerung elektronisch ansteuerbarer Kraftfahrzeugkomponenten bekannt, das einen Zentralprozessor sowie den Kraftfahrzeugkomponenten zugeordnete Satellitenprozessoren aufweist, wobei die Satellitenprozessoren mit dem Zentralprozessor über einen Multiplex-EinleiterBus verbunden sind, wobei Steuer- und Kontrollsignale über den Multiplex-EinleiterBus hin und her übertragen werden.

Aus US-A-5 077 670 ist ein Kommunikationssystem bzw. Verfahren bekannt bestehend aus einem übergeordneten Electronic Control Unit (ECU), das an eine Vielzahl untergeordneter ECUs Anweisungen verteilt. Die Kommunikation ist darauf ausgerichtet, Fehler im Übertragungsprozess zu erkennen und zu vermeiden. Dies wird dadurch erreicht, dass Nachrichten der übergeordneten ECU und Antworten der angesprochenen untergeordneten ECUs in einer algorithmisch festgelegten Reihenfolge ausgetauscht werden.

Solche Systeme weisen aber den Nachteil auf, dass es Unbefugten Personen möglich ist, durch Fremdeinspeisung auf den Bus, Funktionen der einzelnen Fahrzeugkomponenten zu bewirken. Insbesondere bei solchen Komponenten, die der Sicherung des Fahrzeuges dienen bzw. durch die sich ein Unbefugter Zugriff zu dem Fahrzeug verschaffen kann, wie beispielsweise Türschlösser und Fensterheber, ist es von besonderem Interesse, diese Komponenten von der Beeinflussung Dritter zu schützen.

Aufgabe der Erfindung ist es daher, ein Steuerungssystem und Verfahren zu schaffen, das ein sicheres Betreiben erlaubt, wobei ein Dritter keine Möglichkeit hat, auf das System über Fremdeinspeisung Zugriff zu nehmen, und gleichzeitig sichergestellt ist, dass Funktionen, die von einem Berechtigten über den Sender in dem System ausgelöst werden sollen, zuverlässig ausgeführt werden.

Der Erfindung liegt die Erkenntnis zugrunde, dass diese Aufgabe durch ein Steuerungssystem und ein Verfahren gelöst werden kann, bei denen die Kommunikation zwischen Empfänger und Sender überwacht wird.

Diese Aufgabe wird erfindungsgemäß durch ein Steuerungssystem zur Steuerung von Kraftfahrzeugkomponenten gelöst, wobei das System mindestens einen Sender und mindestens einen Empfänger umfasst, der Sender im wesentlichen dazu dient, Botschaften an den Empfänger zu senden, der Empfänger im wesentlichen dazu dient, Botschaften zu empfangen und Funktionen entsprechend der Botschaft auszuführen oder zu sperren, und der mindestens eine Sender und der mindestens eine Empfänger durch mindestens einen Bus miteinander verbunden sind, wobei der Sender auch für den Empfang von über den Bus gesandten Botschaften ausgelegt ist und dieser Sender Einrichtungen aufweist, mittels derer von dem Sender gesandte und empfangene Botschaften überwacht werden.

Der Empfänger ist dazu ausgelegt, bei Erhalt einer Botschaft einen Empfangstimer zu starten und eine in einer Botschaft enthaltene Anweisung erst nach eingangslosem Ablauf des Empfangstimers auszuführen.

Als Kraftfahrzeugkomponenten werden im Rahmen der Erfindung alle elektronisch ansteuerbaren Komponenten bezeichnet, insbesondere solche Komponenten wie Türschlösser und Fensterheber. Unter Botschaften sind im Sinne dieser Erfindung Signale, insbesondere digitale Signale, zu verstehen, die über entsprechende Verbindungen zwischen Empfänger und Sender hin und her gesandt werden können oder durch eine Fremdeinspeisung in diese Verbindung eingebracht werden können. Botschaften umfassen im Sinne dieser Erfindung zumindest einen Botschaftsinhalt bzw. eine Anweisung und eine Botschaftskennung bzw. einen Botschaftsidentifier.

Eine Aufgabe des Senders ist der Empfang von Signalen von einem Benutzer. Der Sender kann aber auch unmittelbar von dem Benutzer bedient werden, um darüber Befehle in das System einzugeben. Weiterhin dient der Sender zum Senden von Botschaften an den Empfänger, die zum einen durch die Eingabe vom Benutzer erzeugt werden oder die in dem Sender erzeugt werden. Der Empfänger andererseits dient im wesentlichen dem Empfang der Botschaften des Senders sowie dem Auslösen oder Sperren einer Funktion einer Kraftfahrzeugkomponente. Das Ausführen und Sperren einer Funktion kann durch den Empfänger unmittelbar oder über weitere Vorrichtungen oder Verbindungen, die dem Empfänger nachgeschaltet sind, erfolgen.

Durch die Überwachung der Botschaften, die von dem Sender gesandt und empfangen werden, ist es möglich, Botschaften, die von außen in das System eingebracht wurden, zu identifizieren und diese entsprechend zu blockieren.

Vorzugsweise dienen die für diese Überwachung vorgesehenen Einrichtungen des Senders zum Vergleich gesandter und empfangener Botschaften in dem Sender. Der Vergleich findet vorzugsweise bezüglich der Botschaftskennung, dem sogenannten Identifier statt. Es ist aber auch möglich, die Botschaften bezüglich ihres Inhalts oder des Sendezeitpunkts zu vergleichen. Bei diesem Vergleich kann der Sender die von ihm über den Bus gesandten Botschaften von den Botschaften, die nicht von dem Sender auf den Bus gelegt wurden, unterscheiden und somit fremdeingespeiste Botschaften identifizieren.

In einer Ausführungsform dienen die Einrichtungen des Senders zum Bearbeiten der durch den Sender empfangenen Botschaften. Die Bearbeitung der Botschaft findet vorzugsweise nach dem Vergleich der gesandten und empfangenen Botschaften statt, wenn sich aus dem Vergleich eine Unregelmäßigkeit erkennen lässt. Die Bearbeitung kann ein reines Rücksenden der Botschaft an den Empfänger sein. Vorzugsweise stellt die Bearbeitung der Botschaft aber eine Bearbeitung des Inhaltes der Botschaft dar. Besonders bevorzugt wird im letzteren Fall der Inhalt einer Botschaft, die der Sender empfangen hat, die er aber nicht auf den Bus gelegt hatte, umgekehrt. Beinhaltet die Botschaft beispielsweise die Anweisung, die Fensterheber zu betätigen, so wird der Inhalt der Botschaft durch die Einrichtungen des Sender umgewandelt in die Anweisung die Fensterheber zu sperren. Die Einrichtungen zum Bearbeiten der Botschaften können in dem Sender selber vorgesehen sein, oder mit diesem verbunden sein.

Vorzugsweise weist auch der Empfänger Einrichtungen auf, mittels derer der Erhalt von Botschaften überwacht wird. Diese Einrichtungen können dazu dienen, die empfangenen Botschaften zeitlich zu überwachen, d.h. das Eintreffen von Botschaften bezüglich der dazwischenliegenden Zeitspanne zu überprüfen. Diese Einrichtungen stellen vorzugsweise einen Empfangstimer dar.

Die der Erfindung zugrunde liegende Aufgabe wird weiterhin durch ein Verfahren zur Steuerung von Kraftfahrzeugkomponenten mit den Merkmalen gemäß Patentanspruch 6 gelöst.

In dem Sender können Botschaften, die eine funktionsauslösende Anweisung, wie beispielsweise "Zentralverriegelung aus", beinhalten, überwacht werden, indem die funktionsauslösende Botschaft in der Kommunikationsmatrix des Senders zusätzlich als Empfangsbotschaft eingetragen wird. Durch diese Eintragung ist es dem Sender möglich, die Botschaften, die nicht von dem Sender gesandt wurden, durch Vergleich mit vom Sender gesandten Botschaften zu identifizieren.

Vorzugsweise negiert der Sender abhängig von dem Ergebnis des Vergleiches die Anweisung, die in einer Botschaft, die nicht von dem Sender gesandt wurde, enthalten ist, und legt diese so bearbeitete Botschaft auf den Bus, über den sie an den mindestens einen Empfänger gesandt wird. Unter Negieren ist im Sinne dieser Erfindung die Korrektur des Botschaftsinhaltes, d.h. der in der Botschaft enthaltenen Anweisung, zu verstehen. Lautet die fremdeingespeiste, d.h. nicht vom Sender auf dem Bus abgelegte, Anweisung beispielsweise "Zentralverrieglung aus", so wird diese Anweisung in die Anweisung "Zentralverriegelung ein" negiert.

Das heißt, dass im Falle einer fremdeingespeisten Botschaft, die von dem Sender erkannt und negiert wird, der Empfänger die in der Botschaft enthaltene Anweisung nicht ausführt, da der Empfänger die negierte Botschaft von dem Sender erhält und somit der Empfangstimer nicht eingangslos abläuft.

Zusätzlich kann der Empfänger nach dem Erhalt einer Botschaft über den Bus ein Kontrollsignal auf den Bus absetzen.

Die Erfindung wird im Folgenden anhand der beiliegenden Zeichnungen, die den Stand der Technik und ein Ausführungsbeispiel darstellen, beschrieben.

Es zeigen:
Figur 1: eine schematische Darstellung einer Ausführungsform des erfindungsgemäßen Systems;
Figur 2: ein Flussdiagramm zur Darstellung der Funktionsweise des erfindungsgemäßen Steuerungssystems und des erfindungsgemäßen Verfahrens;
Figur 3 A und 3 B: schematisch den zeitlichen Ablauf der Signalübertragung im Normalfall und bei Fremdeinspeisung.

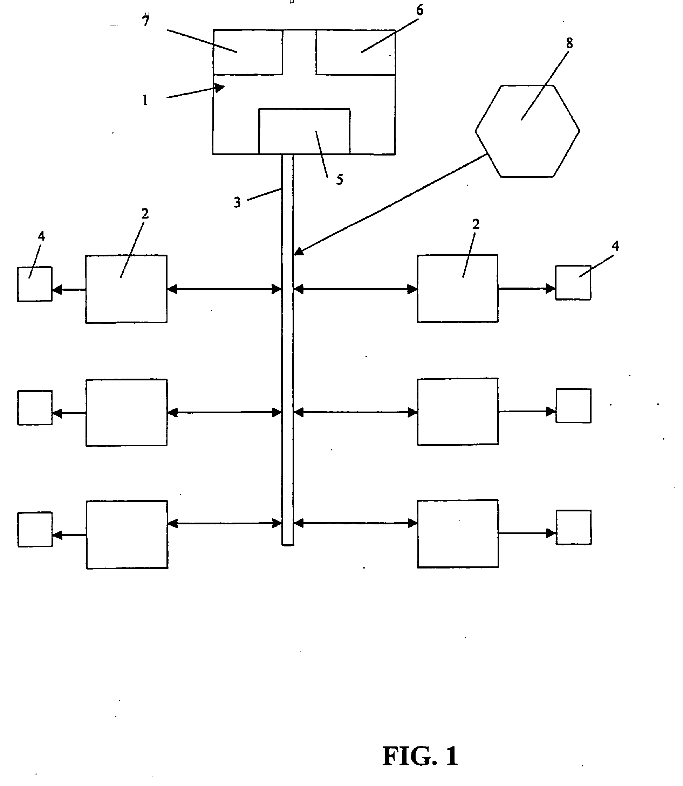

Das in Figur 1 dargestellte System umfasst einen Sender 1, mehrere Empfänger 2, sowie einen diese Elemente verbindenden Bus 3. In der dargestellten Ausführungsform ist den Empfängern 2 jeweils eine Kraftfahrzeugkomponente 4 nachgeschaltet. Weiterhin ist in dem Sender 1 eine Einrichtung 5 zum Senden und Empfangen von Botschaften, eine Einrichtung 6 zum Vergleichen gesandter und empfangener Botschaften sowie eine Einrichtung 7 zur Korrektur von Botschaften dargestellt. Diese Einrichtungen 5, 6 und 7 müssen nicht räumlich voneinander getrennt sein. Es liegt auch im Rahmen der Erfindung, dass eine Einrichtung mehrere der Funktionen der Einrichtungen 5, 6 oder 7 übernimmt. Zur Verdeutlichung der Funktionsweise des Systems ist weiterhin ein systemexterner Sender 8 dargestellt, der einen Fremdeingriff in das System verdeutlichen soll.

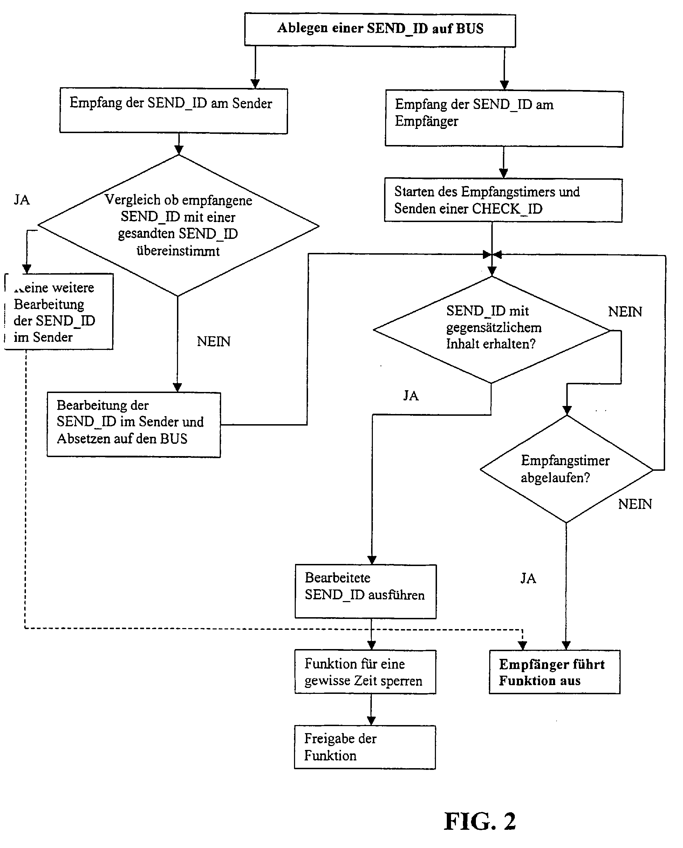

Anhand des in Figur 2 gezeigten Flussdiagramms soll eine mögliche Funktionsweise des erfindungsgemäßen Systems und eine Ausführungsform des erfindungsgemäßen Verfahrens beschrieben werden.

Zunächst wird eine SEND_ID auf den Bus 3 gelegt. Diese SEND_ID stellt eine Botschaft dar, die eine Anweisung, d.h. einen Botschaftsinhalt enthält, der beispielsweise FUNKTION_EIN lauten kann, wobei die Funktion in der Botschaft beispielsweise als Fensterheber spezifiziert sein kann. Der Sender 1 und der Empfänger 2 weisen beide Einrichtungen auf, mittels derer sie Botschaften über den Bus 3 empfangen können. Bei dem Sender 1 kann die SEND_ID in die Kommunikationsmatrix als Empfangsbotschaft eingetragen sein.

Empfängt der Sender 1 somit die SEND_ID über den Bus 3, so wird in dem Sender 1 verglichen, ob diese empfangene SEND_ID mit einer von dem Sender 1 versandten SEND_ID übereinstimmt. Durch diesen Vergleich können fremdeingespeiste Botschaften, mittels derer Dritte Botschaften in das System einspeisen wollen, identifiziert werden. Wird bei dem Vergleich festgestellt, dass es sich bei der empfangenen SEND_ID um eine Botschaft handelt, die tatsächlich von dem Sender 1 versandt wurde, so erfolgt keine weitere Bearbeitung der SEND_ID in dem Sender 1. Wie später erläutert werden wird, wird dann die Funktion an dem Empfänger 2 ausgeführt, z.B. die entsprechende Komponente 4 aktiviert.

Wird bei dem Vergleich aber festgestellt, dass die von dem Sender 1 empfangene SEND_ID mit keiner kürzlich von ihm gesandten Botschaft übereinstimmt, so wird die empfangene SEND_ID bearbeitet, indem der Botschaftsinhalt geändert, vorzugsweise negiert bzw. umgekehrt wird. Ein solcher Fall kann auftreten, wenn ein Unbefugter sich z.B. über einen systemexternen Sender 8 Zugriff auf das System verschaffen und dieses beeinflussen will. Lautete der Inhalt, der vom unbefugten Dritten auf den Bus 3 gebrachten und vom Sender 1 empfangenen SEND_ID beispielsweise "FUNKTION_EIN", so wird dieser in dem Sender 1 geändert in FUNKTION_AUS". Die so geänderte SEND_ID wird auf den Bus 3 gelegt und erreicht, da lediglich der Inhalt der Botschaft, aber nicht die Botschaftskennung bzw. der Botschaftsidentifier geändert wurde, den gleichen Empfänger 2, der zuvor die ursprüngliche fremdeingespeiste Botschaft empfangen hatte.

Auf der Seite des Empfängers 2 verläuft das Verfahren wie folgt: Der Empfänger 2 empfängt zunächst die SEND_ID, die ursprünglich auf dem Bus 3 abgesetzt wurde. Beim Erhalt jeder SEND_ID, die den Inhalt "FUNKTION_EIN" aufweist, startet der Empfänger 2 einen Empfangs- bzw. Eingangstimer. Der Timer wird auf eine gewisse Zeit, beispielsweise 5ms, eingestellt und dient der zeitlichen Überwachung von eingehenden Botschaften. Während der Timer läuft, wird die Funktion von dem Empfänger 2 noch nicht ausgeführt. Zeitgleich mit oder unmittelbar nach dem Starten des Timers setzt der Empfänger 2 eine CHECK_ID auf dem Bus 3 ab. Diese CHECK_ID kann eine spezielle ID oder eine Applikationsbotschaft sein.

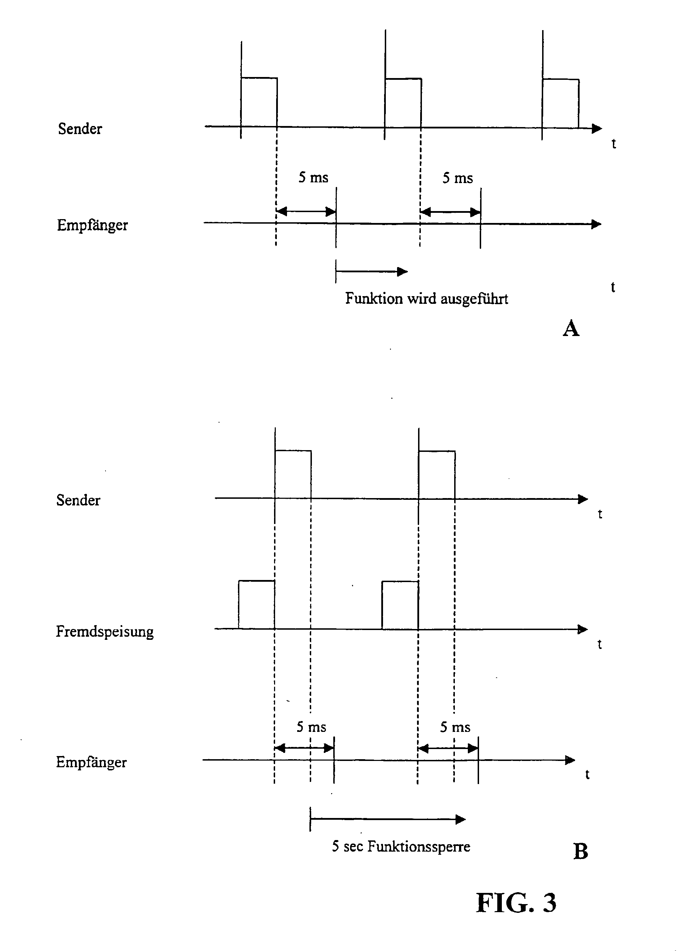

Anschließend überprüft der Empfänger 2, ob er eine weitere SEND_ID mit gleichem Botschaftsidentifier wie die ursprüngliche SEND_ID, aber mit verändertem Botschaftsinhalt, erhalten hat. Ist keine solche SEND_ID eingegangen, wird überprüft, ob der Empfangstimer bereits abgelaufen ist. Ist dies nicht der Fall, wird so lange weiter geprüft, ob eine SEND_ID mit geändertem Inhalt empfangen wurde, bis der Timer abgelaufen ist. Ist nach Ablauf des Timers keine SEND_ID mit einem Inhalt, der gegensätzlich zu dem Inhalt der ursprünglichen SEND_ID ist, eingegangen, so führt der Empfänger 2 die Funktion aus bzw. initialisiert die Ausführung der Funktion an der betroffenen Komponente 4. Dieser Verfahrensablauf ist auch in der Figur 3A dargestellt, wobei die Signale an dem Sender und Empfänger über die Zeit wiedergegeben sind. Dieser Verlauf stellt den Normalfall dar, d.h. den Fall, dass die von dem Empfänger 2 erhaltene Botschaft von dem Sender 1 stammt und es sich damit um ein berechtigtes Signal handelt.

Stellt der Empfänger 2 hingegen fest, dass er eine SEND_ID mit gegensätzlichem Inhalt erhalten hat, so führt dieser die geänderte, d.h. vom Sender 1 bearbeitete SEND_ID aus. Der Inhalt der geänderten SEND_ID lautet im vorliegenden Beispiel "FUNKTION_AUS". Der Empfänger 2 sperrt vorzugsweise für eine gewisse Zeit, z.B. 5 Sekunden, diese Funktion und gibt diese erst nach Ablauf dieser Zeit für erneute SEND_ID Anweisungen frei, die dann aber erneut der zuvor beschriebenen Kontrolle in dem Sender 1 und dem Empfänger 2 unterliegen. Dieser Verfahrensablauf ist in Figur 3B wiedergegeben, wobei die Signale an dem Sender 1 und Empfänger 2 über die Zeit wiedergegeben sind.

Das beschriebene Verfahren und System stellen lediglich eine Ausführungsform der Erfindung dar.

Es liegt aber auch im Rahmen der Erfindung, dass der Sender in dem Fall, in dem er feststellt, dass die von ihm empfangene SEND_ID nicht von ihm gesandt wurde, dieser die SEND_ID unverändert an den Empfänger zurücksendet. Bei dieser Ausführungsform überwacht der Sender in dem Zeitintervall, in dem der Empfangstimer läuft, nicht, ob eine SEND_ID mit gegensätzlichem Inhalt empfangen wird, den er dann ausführt, sondern überwacht lediglich den zeitnahen Empfang gleicher SEND_IDs. Empfängt der Empfänger während der Empfangstimer läuft zwei identische SEND_IDs, so ignoriert er die in den Botschaften enthaltenen Inhalte und sperrt die betroffene Funktion für eine gewisse Zeit. Die in der SEND_ID enthaltene Anweisung wird also nicht ausgeführt.

Es ist auch möglich, die Zeit für den Timer auf eine andere Zeit als die oben angegebenen 5ms festzulegen. So ist es z.B. möglich, dass die Zeitspanne für den Timer so gewählt wird, dass diese einem gesamten Zyklus entspricht, der im Normalfall auftritt, d.h. der Dauer zwischen im Normalfall nacheinander gesandten Botschaften des Senders.

Da es bei dem erfindungsgemäßen Verfahren von Bedeutung ist, dass der Empfänger eine eventuelle Reaktion des Senders, z.B. eine geänderte SEND_ID innerhalb der Zeit erhält, in der der Empfangstimer läuft, kann diese Zeit aber auch den Umständen entsprechend eingestellt, bzw. angeglichen werden. Dies kann insbesondere von Bedeutung sein, wenn auf dem Bus bzw. in dem CAN Botschaften mit unterschiedlichen Prioritäten versandt werden. In einem solchen Fall könnte ein unbefugter Dritter den Bus mit Botschaften hoher Priorität anfüllen und dadurch erreichen, dass der Empfänger innerhalb der vorgegebenen Zeit des Timers keine Korrektur der Botschaft durch den Sender empfangen kann. Dem kann entgegengewirkt werden, indem die Auslastung des Busses oder des CAN überwacht wird und die Zeit für den Timer an die Auslastung angepasst, z.B. verlängert wird.

Im Rahmen der Erfindung ist es auch möglich, dass mehrere Kraftfahrzeugkomponenten von einem Empfänger gesteuert werden.

Weiterhin ist es auch möglich, insbesondere für Botschaftssonderfälle einen angepassten Empfangsalgorithmus zu wählen.

Das erfindungsgemäße System und Verfahren weisen den Vorteil auf, dass durch diese ein Zugriff Unbefugter auf die Steuerung von Fahrzeugkomponenten zuverlässig verhindert werden kann. Weiterhin nimmt die Implementierung des Systems und Verfahrens nur geringe Ressourcen in Anspruch. Der Bedarf an Speicherkapazität, wie beispielsweise ROM oder RAM ist gering. Das System und Verfahren sind darüber hinaus leicht umzusetzen.

## Patentansprüche

1. Steuerungssystem zur Steuerung von Kraftfahrzeugkomponenten (4), wobei das System mindestens einen Sender (1) und mindestens einen Empfänger (2) umfasst, der Sender (1) im wesentlichen dazu dient, Botschaften an den Empfänger (2) zu senden, der Empfänger (2) im wesentlichen dazu dient, Botschaften zu empfangen und Funktionen entsprechend der Botschaft auszuführen oder zu sperren, und der mindestens eine Sender (1) und der mindestens eine Empfänger (2) durch mindestens einen Bus (3) miteinander verbunden sind, wobei der Sender (1) auch für den Empfang von über den Bus (3) gesandten Botschaften ausgelegt ist und dieser Sender (1) Einrichtungen (5, 6, 7) aufweist, mittels derer von dem Sender (1) gesandte und empfangene Botschaften überwacht werden, **dadurch gekennzeichnet, dass** der Empfänger (2) dazu ausgelegt ist, bei Erhalt einer Botschaft einen Empfangstimer zu starten und eine in einer Botschaft enthaltene Anweisung erst nach eingangslosem Ablauf des Empfangstimers auszuführen.

2. Steuerungssystem nach Anspruch 1, **dadurch gekennzeichnet, dass** die Einrichtungen (6) des Senders (1) dem Vergleich von Botschaften, die vom Sender (1) gesandt wurden, und Botschaften, die vom Sender (1) empfangen wurden, dienen.

3. Steuerungssystem nach Anspruch 1 oder 2, **dadurch gekennzeichnet, dass** die Einrichtungen (7) des Senders (1) zum Bearbeiten der durch den Sender (1) empfangenen Botschaften dienen.

4. Steuerungssystem nach Anspruch 1, 2 oder 3, **dadurch gekennzeichnet, dass** der Empfänger (2) Einrichtungen aufweist, mittels derer der Erhalt von Botschaften überwacht wird.

5. Steuerungssystem nach Anspruch 4, **dadurch gekennzeichnet, dass** die Einrichtungen des Empfängers (2) eine zeitliche Überwachung der empfangenen Botschaften durchführen.

6. Verfahren zur Steuerung von Kraftfahrzeugkomponenten mittels eines Systems, das mindestens einen Sender (1) und mindestens einen Empfänger (2) umfasst, der Sender (1) im wesentlichen dazu dient, Botschaften an den Empfänger (2) zu senden, der Empfänger (2) im wesentlichen dazu dient, Botschaften zu empfangen und Funktionen entsprechend der Botschaft auszuführen oder zu sperren, und der mindestens eine Sender (1) und der mindestens eine Empfänger (2) durch mindestens einen Bus (3) miteinander verbunden sind, wobei der Sender (1) die auf den Bus (3) gelegten Botschaften überwacht und mit denen von dem Sender (1) auf den Bus (3) gelegten Botschaften vergleicht, **dadurch gekennzeichnet, dass** der Empfänger (2) bei Erhalt einer Botschaft einen Empfangstimer startet und eine in einer Botschaft enthaltene Anweisung erst nach eingangslosem Ablauf des Empfangstimers ausführt.

7. Verfahren nach Anspruch 6, **dadurch gekennzeichnet, dass** der Sender abhängig von dem Ergebnis des Vergleiches die Anweisung, die in einer Botschaft, die nicht von dem Sender gesandt wurde, enthalten ist, ändert und diese so bearbeitete Botschaft auf den Bus legt, über den sie an den mindestens einen Empfänger gesandt wird.

8. Verfahren nach einem der Ansprüche 6 bis 7, **dadurch gekennzeichnet, dass** der Empfänger nach dem Erhalt einer Botschaft über den Bus ein Kontrollsignal auf den Bus ablegt.

## Claims

1. Control system for controlling components of a vehicle (4), in which the system comprises at least one transmitter (1) and at least one receiver (2), the transmitter (1) is used essentially to send messages to the receiver (2), the receiver (2) is used essentially to receive messages and carry out or block functions according to the message and at least one transmitter (1) and at least one receiver (2) are connected to each other by at least one bus (3), in which the transmitter is also designed to receive messages sent via the bus (3) and this transmitter (1) has devices (5, 6, 7), by means of which messages sent and received by the transmitter (1) are monitored, **characterised in that** the receiver (2) is designed to start a reception timer on receipt of a message and carry out an instruction contained in a message only after the reception timer has run its course without input.

2. Control system according to claim 1, **characterised in that** the devices (6) of the transmitter (1) are used to compare messages, which were sent by the transmitter (1), and messages, which were received by the transmitter (1).

3. Control system according to claim 1 or 2, **characterised in that** the devices (7) of the transmitter (1) are used to process the messages received by the transmitter (1).

4. Control system according to claim 1, 2 or 3, **characterised in that** the receiver (2) has devices, by means of which the receipt of messages is monitored.

5. Control system according to claim 4, **characterised in that** the devices of the receiver (2) carry out temporal monitoring of the messages received.

6. Method for controlling components of a vehicle by means of a system, which comprises at least one transmitter (1) and at least one receiver (2), the transmitter (1) is used essentially to send messages to the receiver (2), the receiver (2) is used essentially to receive messages and carry out or block functions according to the message and at least one transmitter (1) and at least one receiver (2) are connected to each other by at least one bus (3), in which the transmitter (1) monitors the messages put on the bus (3) and compares the messages put on the bus (3) with those from the transmitter (1), **characterised in that** the receiver (2) starts a reception timer on receipt of the message and carries out an instruction contained in a message only after the reception timer has run its course without input.

7. Method according to claim 6, **characterised in that** according to the result of the comparison the transmitter changes the instruction, which is contained in a message, which was not sent by the transmitter, and puts this message, which has been processed in this way, on the bus, via which it will be sent to at least one receiver.

8. Method according to one of claims 6 to 7, **characterised in that** the receiver deposits a control signal on the bus after receipt of a message via the bus.

## Revendications

1. Système de commande destiné à commander des composants de véhicules automobiles (4), le système comprenant au moins un émetteur (1) et au moins un récepteur (2), l'émetteur (1) servant essentiellement à envoyer des messages au récepteur (2), le récepteur (2) servant essentiellement à réceptionner des messages et à exécuter ou verrouiller des fonctions selon le message, et le au moins un émetteur (1) et le au moins un récepteur (2) étant reliés ensemble par l'intermédiaire d'au moins un bus (3), l'émetteur (1) étant également étudié pour la réception de messages envoyés par l'intermédiaire du bus (3) et cet émetteur (1) présentant des dispositifs (5, 6, 7), au moyen desquels des messages envoyés et réceptionnés par l'émetteur (1) sont surveillés, **caractérisé en ce que** le récepteur (2) est étudié pour, lors de la réception d'un message, mettre en marche une horloge à minuterie de réception et pour exécuter une instruction se trouvant dans un message seulement après le déroulement sans entrée de l'horloge à minuterie de réception.

2. Système de commande selon la revendication 1, **caractérisé en ce que** les dispositifs (6) de l'émetteur (1) servent à comparer des messages ayant été envoyés par l'émetteur (1) et des messages ayant été réceptionnés par l'émetteur (1).

3. Système de commande selon la revendication 1 ou 2, **caractérisé en ce que** les dispositifs (7) de l'émetteur (1) servent au traitement des messages réceptionnés par l'émetteur (1).

4. Système de commande selon la revendication 1, 2 ou 3, **caractérisé en ce que** le récepteur (2) présente des dispositifs, au moyen desquels la réception de messages est surveillée.

5. Système de commande selon la revendication 4, **caractérisé en ce que** les dispositifs du récepteur (2) effectuent une surveillance dans le temps des messages réceptionnés.

6. Procédé destiné à commander des composants de véhicules automobiles au moyen d'un système, lequel comprend au moins un émetteur (1) et au moins un récepteur (2), l'émetteur (1) servant essentiellement à envoyer des messages au récepteur (2), le récepteur (2) servant essentiellement à réceptionner des messages et à exécuter ou verrouiller des fonctions selon le message, et le au moins un émetteur (1) et le au moins un récepteur (2) étant reliés ensemble par l'intermédiaire au moins d'un bus (3), l'émetteur (1) surveillant les messages mis en mémoire dans le bus (3) et les comparant aux messages mis en mémoire dans le bus (3) par l'émetteur (1), **caractérisé en ce que** le récepteur (2), lors de la réception d'un message, met en marche une horloge à minuterie de réception et exécute une instruction se trouvant dans un message seulement après l'opération sans entrée de l'horloge à minuterie de réception.

7. Procédé selon la revendication 6, **caractérisé en ce que** l'émetteur, en fonction du résultat de comparaison, modifie l'instruction se trouvant dans un message n'ayant pas été envoyé par l'émetteur, et met en mémoire le message ainsi traité dans le bus, par l'intermédiaire duquel il est envoyé à l'au moins un récepteur.

8. Procédé selon l'une quelconque des revendications 6 à 7, **caractérisé en ce que** le récepteur met en mémoire un signal de contrôle dans le bus à réception d'un message par l'intermédiaire du bus.
